# EUROPÄISCHE PATENTSCHRIFT

(11) **EP 3 050 155 B1**
(45) Veröffentlichungstag und Bekanntmachung des Hinweises auf die Patenterteilung: **15.01.2020**
(21) Anmeldenummer: 14748124.6
(22) Anmeldetag: 05.08.2014
(51) Int. Cl.: H01Q 1/22, H01Q 9/42, G06K 19/077, H01Q 9/30

(54) **ANTENNE FÜR NAHBEREICHSANWENDUNGEN SOWIE VERWENDUNG EINER DERARTIGEN ANTENNE**
ANTENNA FOR SHORT-RANGE APPLICATIONS AND USE OF AN ANTENNA OF THIS TYPE
ANTENNE POUR APPLICATIONS EN CHAMP PROCHE ET UTILISATION D'UNE TELLE ANTENNE

(30) Priorität: 26.09.2013 DE 102013016116
(43) Veröffentlichungstag der Anmeldung: 03.08.2016
(60) Teilanmeldung: 19207558.8
(73) Patentinhaber: Kilian, Dieter, 82140 Olching (DE)
(72) Erfinder: Kilian, Dieter, 82140 Olching (DE)
(74) Vertreter: Roos, Peter
(86) Internationale Anmeldenummer: PCT/EP2014/002153
(87) Internationale Veröffentlichungsnummer: WO 2015/043700

(56) Entgegenhaltungen:
- EP-A1- 2 571 099
- EP-A2- 0 360 594
- WO-A1-2013/047033
- JP-A- 2011 009 883
- US-B1- 6 842 155
- AHIRWAR S D ET AL: "Design and development of compact corrugated loop antenna", INDIA CONFERENCE (INDICON), 2011 ANNUAL IEEE, IEEE, 16. Dezember 2011 (2011-12-16), Seiten 1-5, XP032103137, DOI: 10.1109/INDCON.2011.6139464 ISBN: 978-1-4577-1110-7
- Melvin M. Weiner: "Monopole antennas", 22. April 2003 (2003-04-22), CRC Press, XP002731464, ISBN: 0824748441 Seiten 11,285; Abbildung 2

## Beschreibung

Die vorliegende Erfindung betrifft das Gebiet der Hochfrequenztechnik, insbesondere eine Antenne für Nahbereichsanwendungen wie beispielsweise RFID-Anwendungen. Ferner betrifft die Erfindung die Verwendung einer derartigen Antenne.

Der Begriff "Nahbereichsanwendungen" im Sinne der Erfindung umfasst insbesondere Anwendungen, bei denen die Übertragung von elektromagnetischer Energie und/oder elektromagnetischen Signalen unter Verwendung der Antenne über Distanzen vorgesehen ist, die kleiner als 5 m, insbesondere kleiner als 1 m sind. Bevorzugt ist diese Distanz jedoch größer als 0,01 m, insbesondere größer als 0,05 m.

Aus der Veröffentlichung EP 2 571 099 A1 ist eine z. B. für Rundfunk- oder Mobilfunkanwendungen vorgesehene "Cobra"-Antenne bekannt, umfassend eine zweipolige Leiterstruktur in Form eines Koaxialkabels mit einem ersten Ende zum Anschluss eines Empfängers und einem zweiten Ende, an dem ein Antennenelement in Form einer Metallplatte angeschlossen ist, wobei an dem Koaxialkabel ein Ferritring in einem λ/4-Abstand zum zweiten Ende angeordnet ist.

Aus der Veröffentlichung JP-A-2011-009883 ist eine für WLAN-Anwendungen vorgesehene Antennenvorrichtung bekannt, bei der eine zweipolige Leiterstruktur in Form eines Koaxialkabels bis hin zu einem Masseteil zur Leitung eines Antennensignals dient. Das Antennensignal wird mittels einer Doppelfrequenzresonatoranordnung empfangen oder gesendet, die in einem gewissen Abstand vom Ende des Koaxialkabels angeordnet und über eine einpolige Leiterstruktur damit verbunden ist.

Aus der Veröffentlichung US 6,842,155 B1 ist eine für Mobilfunkanwendungen vorgesehene "inverted-L"-Antenne bekannt. Bei dieser Antenne ist am Ende eines zur Antennensignalleitung vorgesehenen Koaxialkabels ein Innenleiter erweitert, wobei die Innenleitererweiterung zur Ausbildung eines Strahlers ("radiating member") mit zwei voneinander beabstandeten 90°-Biegungen verläuft, so dass der Strahler in einem gewissen Mindestabstand (je nach verwendeter Betriebsfrequenz) von einem Mantelleiter des Koaxialkabels entfernt angeordnet ist, um eine Wechselwirkung mit dem Mantelleiter zu vermeiden.

Aus der Veröffentlichung WO 2013/047033 A1 ist eine für Mobilfunkanwendungen vorgesehene Antennenvorrichtung bekannt, umfassend ein zur Antennensignalleitung vorgesehenes Koaxialkabel und eine am Ende des Koaxialkabels an einen Innenleiter und einen Außenleiter des Koaxialkabels angeschlossene "invertierte F"-Antenne. Die Antenne ist durch eine relativ komplexe Leiterstruktur aus verschiedenen Leitern an einem isolierenden Substrat ausgebildet.

Es ist eine Aufgabe der vorliegenden Erfindung, in einfacher Weise eine drahtlose und zuverlässige Übertragung von Energie und/oder Information insbesondere über kurze Distanzen zu realisieren.

Diese Aufgabe wird gemäß eines ersten Aspekts der Erfindung durch eine Wanderwellenantenne nach Anspruch 1 oder durch deren Verwendung nach Anspruch 8 gelöst. Die abhängigen Ansprüche betreffen vorteilhafte Weiterbildungen der Erfindung.

Mit dem erfindungsgemäßen, relativ einfachen Aufbau lassen sich wie nachfolgend erläutert vorteilhaft breitbandige koaxiale Wanderwellen-Antennen für Nahbereichsanwendungen realisieren.

Der Begriff "Wanderwelle" bezieht sich hierbei auf einen im Rahmen der Erfindung bevorzugten Betriebsmodus der Antenne, bei welchem z. B. beim Senden ausgehend vom zweiten Ende der koaxialen Leiterstruktur elektromagnetische Wellen entlang der Leiterstruktur in Richtung zum ersten Ende der Leiterstruktur hin zurücklaufen.

Diese Funktionsweise der Antenne im Sendemodus, d. h. bei Einspeisung eines hochfrequenten Sendesignals am Anschlussende (erstes Ende) kann wie folgt beschrieben werden: Das am ersten Ende der Leiterstruktur, zwischen Innenleiter und Mantelleiter angelegte und somit eingespeiste Sendesignal wird im Prinzip wie z. B. bei einer herkömmlichen "Koaxialleitung" entlang der koaxialen Leiterstruktur zu deren zweiten Ende hin übertragen. Die durch das zweite Ende geschaffene Diskontinuität der Leiterstruktur in Verbindung mit der kapazitiven Ankopplung des Innenleiterendes über die an dieser Stelle vorgesehene Innenleitererweiterung an den Mantelleiter bewirkt das erwähnte Zurücklaufen von elektromagnetischen Wanderwellen als Oberflächenwellen entlang der Leiterstruktur (an der Außenseite des Mantelleiters) in Richtung des ersten Endes der Leiterstruktur.

Für viele interessante Anwendungen ist es hierbei von Vorteil, wenn die Antenne gewissermaßen konzentriert um sich herum ein elektromagnetisches Feld (Wanderwellen) aufbaut, aber nur sehr wenig oder überhaupt keine elektromagnetische Energie ausstrahlt (durch sich "ablösende" elektromagnetische Wellen). Ein derartiger Betriebsmodus wird hier als "Coupled Mode" bezeichnet.

Gemäß einer Ausführungsform einer "Coupled Mode"-Betriebsweise einer erfindungsgemäßen Antenne ist z. B. vorgesehen, dass im Sendemodus die auf Grund der Sendesignaleinspeisung am zweiten Ende der Leiterstruktur ankommende Energie zu mehr als 50 % als "an der Leiterstruktur gebundene" Wanderwelle ausgehend vom zweiten Ende (zurück in Richtung des ersten Endes) läuft. In diesem Fall wird demzufolge weniger als 50 % der am zweiten Ende ankommenden Energie als elektromagnetische Welle von der Antenne abgestrahlt.

Alternativ oder zusätzlich kann bei der "Coupled Mode"-Betriebsweise einer erfindungsgemäßen Antenne z. B. vorgesehen sein, dass im Sendemodus die auf Grund der Sendesignaleinspeisung am ersten Ende (Anschlussende) der Leiterstruktur eingespeiste Energie zu mehr als 40 % als an der Leiterstruktur gebundene Wanderwelle ausgehend vom zweiten Ende (zurück in Richtung des ersten Endes) läuft.

Die erfindungsgemäße Antenne besitzt eine langgestreckte Leiterstruktur. Diese Leiterstruktur kann starr oder flexibel sein. Auch ist es möglich, dass sowohl wenigstens ein starrer Abschnitt als auch wenigstens ein flexibler Abschnitt vorgesehen sind, aus welchen sich die Leiterstruktur zusammensetzt. Die Länge der langgestreckten Leiterstruktur kann z. B. um einen Faktor im Bereich von 10 bis 50.000 größer als eine (maximale) Querausdehnung (z. B. Durchmesser) der Leiterstruktur sein.

Die Länge der langgestreckten Leiterstruktur kann z. B. mindestens 0,05 m, insbesondere mindestens 0,1 m betragen. Besonders interessant sind jedoch Anwendungen, bei denen diese Länge wesentlich größer ist. Für die meisten Anwendungen ist es jedoch ausreichend, wenn diese Länge maximal 200 m, insbesondere maximal 100 m beträgt.

Bei der erfindungsgemäßen Wanderwellenantenne ist vorgesehen, dass die Länge eines weiter unten noch beschriebenen Signalsende/Empfangsabschnittes mindestens das 2-fache, insbesondere mindestens das 5-fache der betriebsmäßig vorgesehenen Wellenlänge der erwähnten Wanderwellen beträgt.

In einer Ausführungsform ist vorgesehen, dass letztere Länge bei einer betriebsmäßig vorgesehenen Signalfrequenz von bis zu 1 GHz maximal das 500-fache, insbesondere maximal das 300-fache der dementsprechenden Wellenlänge ist. Für Betriebsfrequenzen von mehr als 1 GHz ist gemäß einer Ausführungsform vorgesehen, dass diese Länge maximal das 1.000-fache, insbesondere maximal das 500-fache der dementsprechenden Betriebswellenlänge der Wanderwellen ist.

Die erfindungsgemäße Antenne wird bevorzugt mit einer Betriebsfrequenz (Trägerfrequenz des Antennensignals im Sendemodus) im Bereich von 400 MHz bis 6 GHz verwendet. In einer Ausführungsform liegt die Betriebsfrequenz z. B. im Bereich von 860 bis 960 MHz (wie z. B. für viele RFID-Anwendungen üblich). In einer anderen Ausführungsform wird eine Betriebsfrequenz im Bereich von 1 bis 3 GHz, beispielsweise 2,4 GHz, verwendet.

Der Innenleiter und der Mantelleiter sind elektrisch leitend (z. B. aus Metall). Im einfachsten Fall besitzt der Innenleiter einen kreisrunden Querschnitt und der Mantelleiter einen kreisringförmigen Querschnitt.

Abweichend von kreisrunden Querschnittskonturen sind auch andere Querschnittskonturen für den Innenleiter und/oder den Mantelleiter möglich, beispielsweise rechteckige bzw. quadratische oder ovale Formen.

Der Innenleiter kann massiv oder als Hohlleiter ausgebildet sein.

Der Querschnitt des Innenleiters und/oder der Querschnitt des Mantelleiters sind über die Länge der Leiterstruktur betrachtet im einfachsten Fall einheitlich.

In Radialrichtung betrachtet zwischen Innenleiter und Mantelleiter kann eine elektrische Isolierung bzw. ein Dielektrikum (einschließlich z. B. Luft) angeordnet sein. Radial außerhalb des Mantelleiters, der wie der Innenleiter bevorzugt aus einem metallischen Material gebildet sein kann, ist bevorzugt eine elektrische Isolierung (z. B. aus Kunststoff) vorgesehen, nachfolgend auch als "Isoliermantel" bezeichnet.

Die Innenleitererweiterung ist eine am zweiten Ende der Leiterstruktur mit dem Innenleiter elektrisch verbundene Struktur, welche im Sendemodus der Antenne zum "Auskoppeln" von Energie aus dem Innenleiter und "Einkoppeln" dieser Energie in den Mantelleiter dient.

Die Innenleitererweiterung ist im einfachsten Fall ein elektrischer Leiter, der einerseits mit dem Innenleiter verbunden ist und andererseits mit einem freien Ende bevorzugt relativ nah an den Mantelleiter heranragt, um die kapazitive Kopplung an den Mantelleiter zu realisieren.

In einer Weiterbildung ist vorgesehen, dass die Innenleitererweiterung im Verlauf zwischen Innenleiter und Mantelleiter wenigstens ein kapazitives, induktives oder resistives Element aufweist.

In einer bevorzugten Ausführungsform verläuft die Innenleitererweiterung wenigstens teilweise außerhalb des Mantelleiters.

In einer Ausführungsform ist das freie Ende der Innenleitererweiterung kapazitiv an die Außenseite des Mantelleiters angekoppelt. Alternativ oder zusätzlich ist eine kapazitive Ankopplung an die Innenseite und/oder die Stirnseite (am Leiterstrukturende) des Mantelleiters denkbar.

In einer Ausführungsform ist die Innenleitererweiterung einstückig verbunden mit dem Innenleiter ausgebildet. In einer anderen Ausführungsform ist die Innenleitererweiterung separat vom Innenleiter, jedoch mit diesem verbunden ausgebildet.

Bei der erfindungsgemäßen Wanderwellenantenne ist in Längsrichtung der Leiterstruktur betrachtet im Abstand zum zweiten Ende der Leiterstruktur, beispielsweise am Außenumfang des Mantelleiters (z. B. einen Isoliermantel umgebend), eine Oberflächenwellendämpfungseinrichtung angeordnet.

Eine derartige Oberflächenwellendämpfungseinrichtung ist insofern vorteilhaft, als damit der Bereich der erwähnten "zurücklaufenden Wanderwellen" entlang der Leiterstruktur gut definiert begrenzt werden kann. Die Dämpfungseinrichtung dient dazu, die Energie eintreffender zurücklaufender Wanderwellen zumindest größtenteils zu absorbieren. In einer Ausführungsform weist die Dämpfungseinrichtung hierfür wenigstens einen Ferritring auf, welcher den Außenumfang des Mantelleiters umgibt. Insbesondere können auch mehrere Ferritringe in Längsrichtung der Leiterstruktur hintereinander angeordnet sein, welche (mit oder ohne gegenseitigen Abstand) jeweils den Außenumfang des Mantelleiters umgeben. In einer Weiterbildung ist der Ferritring (bzw. wenigstens einer von mehreren Ferritringen) verschiebbar an der Leiterstruktur angebracht.

Alternativ oder zusätzlich zu wenigstens einem den Mantelleiter umgebenden Ferritring kann die Oberflächenwellendämpfungseinrichtung auch als eine im Verlauf der langgestreckten zweipoligen koaxialen Leiterstruktur zwischengefügte Dämpfungseinheit umfassend ein Dämpfungsnetzwerk (aus kapazitiven und/oder induktiven und/oder resistiven Elementen) aufweisen.

In einer Ausführungsform umfasst die Oberflächenwellendämpfungseinrichtung eine Erdung des Mantelleiters. Eine solche Erdung kann z. B. über eine am Außenumfang des Mantelleiters angebrachte "Erdungsmanschette" bewerkstelligt werden. Eine solche Erdungsmanschette kann z. B. geteilt aus zwei Manschettenhälften ausgebildet sein, die zur Anbringung miteinander verbunden (z. B. verschraubt) werden.

Bei der erfindungsgemäßen Wanderwellenantenne wird mit der Oberflächenwellendämpfungseinrichtung die Gesamtlänge der koaxialen Leiterstruktur in einen zwischen dem ersten Ende der Leiterstruktur und der Dämpfungseinrichtung befindlichen "Signalleitungsabschnitt" und einen zwischen der Dämpfungseinrichtung und dem zweiten Ende der Leiterstruktur befindlichen "Signalsende/Empfangsabschnitt" unterteilt. In einer Weiterbildung der Erfindung ist vorgesehen, dass innerhalb des Signalsende/Empfangsabschnittes eine oder mehrere "Diskontinuitäten" (nennenswerte lokale Abweichungen eines für die Wanderwellen wirksamen Wellenwiderstandes) vorgesehen sind. Jede solche Diskontinuität kann z. B. ebenfalls durch einen Ferritring wie bereits beschrieben oder eine ähnliche Einrichtung implementiert werden. Der Vorteil dieser Weiterbildung besteht darin, dass damit die Ausbreitung der Wanderwellen entlang der Leiterstruktur in einer gewünschten Weise beeinflusst werden kann (etwa für eine "Wellenformung").

Bei einer relativ langen Antenne kann die Anordnung einer Oberflächenwellendämpfungseinrichtung insofern entbehrlich sein, als die vom zweiten zum ersten Leiterstrukturende zurücklaufenden Wanderwellen auf Grund des hierbei unvermeidlichen Intensitätsverlustes keine allzu große Intensität mehr besitzen, wenn diese in die Nähe des ersten Endes kommen. Auch in diesem Fall können jedoch die vorstehend erwähnten Diskontinuitäten, z. B. durch Ferritringe oder dergleichen implementiert, an einer oder mehreren Stellen im Verlauf der Antenne vorteilhaft sein, um die Wellenausbreitung gezielt zu beeinflussen.

Wie bereits erwähnt besteht eine bevorzugte Verwendung der erfindungsgemäßen Antenne darin, diese als eine Wanderwellenantenne in einem "Coupled Mode" zu verwenden. Diese erfindungsgemäße Verwendung kann z. B. für eine Kommunikation mit in der Umgebung der Antenne befindlichen Transpondern und/oder für eine Kommunikation mit in der Umgebung der Antenne befindlichen Komponenten eines Computernetzwerkes vorgesehen sein.

In der "Coupled Mode"-Betriebsweise kann insbesondere eine Kommunikation nicht durch elektromagnetische Strahlung im engeren Sinne sondern durch eine Wellenkopplung mit innerhalb der Antennenreichweite befindlichen Systemen oder Einheiten erfolgen. Alternativ oder zusätzlich zur drahtlosen Kommunikation kann auch eine drahtlose Energieversorgung solcher Systeme bzw. Einheiten (z. B. Sensoren, insbesondere "intelligente Sensoren") bewerkstelligt werden.

In einer Weiterbildung der Erfindung ist eine "modulare Bauweise" der Antenne vorgesehen, die insbesondere dadurch realisiert sein kann, dass im Verlauf vom ersten Ende der Leiterstruktur bis zum zweiten Ende der Leiterstruktur (oder der am zweiten Ende angebundenen Innenleitererweiterung) eine oder mehrere elektrische Kontaktierungen (z. B. Steck- und/oder Schraub-Verbindungen) vorgesehen sind, welche dementsprechend einzelne "Module" begrenzen, aus denen die Antenne zusammengesetzt ist.

In einer diesbezüglichen Ausführungsform ist vorgesehen, dass eine Oberflächenwellendämpfungseinrichtung der vorstehend bereits beschriebenen Art an einem oder an beiden ihrer Enden mit einer entsprechenden Anschlusseinrichtung (z. B. elektrischer Stecker oder dergleichen) ausgestattet ist. Alternativ oder zusätzlich kann eine solche Anschlusseinrichtung insbesondere auch am zweiten Ende der Leiterstruktur, zum Anschluss der Innenleitererweiterung, vorgesehen sein. Dementsprechend kann auch die Innenleitererweiterung mit einer (Gegen-)Anschlusseinrichtung ausgestattet sein.

Ein gravierender Vorteil einer derartigen modularen Bauweise der Antenne besteht z. B. darin, dass zum Aufbau der Antenne teilweise herkömmliche und kommerziell bereits erhältliche Komponenten wie z. B. "Koaxialkabel" verwendet werden können, die zur erfindungsgemäßen Ausbildung einer Antenne lediglich noch mit den jeweils benötigten zusätzlichen Modulen zu ergänzen sind. Insbesondere kann ein herkömmliches Koaxialkabel verwendet werden, um die erfindungsgemäß vorgesehene koaxiale Leiterstruktur zu bilden. Falls eine Oberflächenwellendämpfungseinrichtung vorgesehen ist, so kann diese z. B. durch ein entsprechendes Dämpfungsmodul gebildet werden, welches beiderseits mit herkömmlichen Koaxialkabeln ergänzt wird (z. B. über herkömmliche elektrische Steck/Schraubverbindungen), um durch die beiden Koaxialkabel einerseits den Signalleitungsabschnitt und andererseits den Signalsende/Empfangsabschnitt der Antenne zu realisieren.

Die Erfindung wird nachfolgend anhand von Ausführungsbeispielen mit Bezug auf die beigefügten Zeichnungen weiter beschrieben. Es stellen dar:
- Fig. 1: eine Antenne gemäß eines ersten, nicht erfindungsgemäßen Ausführungsbeispiels,
- Fig. 2: eine Antenne gemäß eines weiteren, nicht erfindungsgemäßen Ausführungsbeispiels,
- Fig. 3: eine Antenne gemäß eines weiteren Ausführungsbeispiels,
- Fig. 4: die Antenne von Fig. 2, dargestellt in einer bestimmten Anwendungssituation,
- Fig. 5: eine Antenne gemäß eines weiteren Ausführungsbeispiels,
- Fig. 6: eine Antenne gemäß eines weiteren Ausführungsbeispiels, dargestellt in Draufsicht,
- Fig. 7: die Antenne von Fig. 6, dargestellt in schematischer Seitenansicht, und
- Fig. 8: eine Antenne gemäß eines weiteren Ausführungsbeispiels, in einer Darstellung entsprechend Fig. 7.

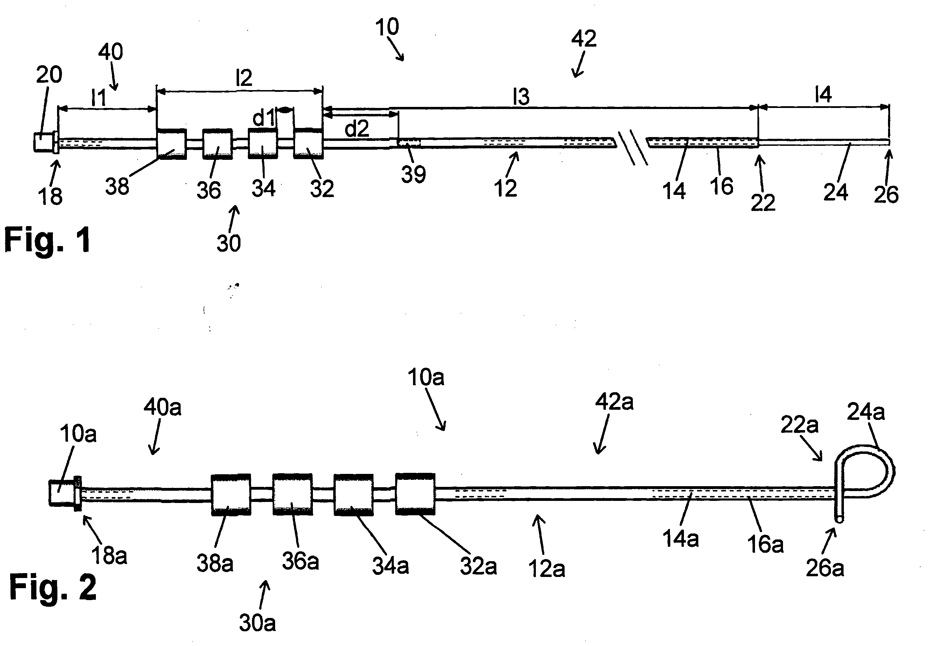

Fig. 1 zeigt eine für Nahbereichsanwendungen, insbesondere z. B. RFID-Anwendungen, vorgesehene Antenne 10 gemäß eines ersten, nicht erfindungsgemäßen Ausführungsbeispiels.

Die Antenne 10 umfasst eine langgestreckte zweipolige koaxiale Leiterstruktur 12 mit einem elektrisch leitenden Innenleiter 14 und einem diesen koaxial umgebenden elektrisch leitenden Mantelleiter 16.

Im dargestellten Ausführungsbeispiel ist der Innenleiter 14 zylindrisch und der Mantelleiter 16 hohlzylindrisch. Der Innenleiter 14 wie auch der Mantelleiter 16 sind z. B. jeweils aus einem metallischen Material gebildet, wobei radial zwischen dem Innenleiter und dem Mantelleiter 16 über die ganze Länge der Leiterstruktur 12 zweckmäßigerweise eine elektrisch isolierende Zwischenschicht (z. B. aus Kunststoff) vorhanden ist.

Ein erstes Ende 18 der Leiterstruktur 12 (in Fig. 1 links) ist zum Anschluss eines Senders und/oder Empfängers für ein mit der Antenne 10 zu sendendes bzw. ein von der Antenne 10 zu empfangendes Antennensignal vorgesehen und ist im dargestellten Beispiel hierfür mit einem herkömmlichen Koaxialstecker 20 versehen, welcher in für "herkömmliche Koaxialleitungen" herkömmlicher Weise an diesem ersten Ende 18 einen elektrischen Anschluss für den Innenleiter 14 wie auch für den Mantelleiter 16 realisiert.

An einem gegenüberliegenden zweiten Ende 22 der Leiterstruktur 12 (in Fig. 1 rechts) ist eine im dargestellten Beispiel einstückig mit dem Innenleiter 14 ausgebildete und mit dem Innenleiter 14 somit elektrisch verbundene Innenleitererweiterung 24 vorgesehen, welche sich im dargestellten Beispiel ausgehend vom zweiten Ende 22 der Leiterstruktur 12 geradlinig und koaxial zum Verlauf von Innenleiter 14 und Mantelleiter 16 unmittelbar vor dem zweiten Ende 22 aus dem Mantelleiter 16 heraus erstreckt. Die Innenleitererweiterung 24 erstreckt sich geradlinig bis hin zu einem freien Ende 26 der Innenleitererweiterung 24, wobei je nach Länge der Innenleitererweiterung 24 eine gewisse kapazitive Ankopplung des freien Endes 26 bzw. der Innenleitererweiterung 24 an den Mantelleiter 16 im Bereich von dessen zweiten Ende 22 gegeben ist.

In einem Sendemodus der Antenne 10, wenn also am Koaxialstecker 20 des ersten Endes 18 ein zu sendendes Antennensignal eingespeist wird, so läuft dieses Antennensignal entlang der Leiterstruktur 12 bis hin zum Ende 22 und wird dort mehr oder weniger stark reflektiert, um als gebundene Wanderwelle ausgehend vom zweiten Ende 22 am Mantelleiter 16 entlang zurück in Richtung zum ersten Ende 18 zu laufen.

Bei entsprechend gewählter Betriebsweise, etwa hinsichtlich der Frequenz und Leistung des eingespeisten Antennensignals, lässt sich erreichen, dass die Antenne 10 ein elektromagnetisches Wechselfeld um sich herum aufbaut, aber relativ wenig abstrahlt. Vielmehr kann erreicht werden, dass die Antenne 10 als eine Wanderwellenantenne in einem "Coupled Mode" betrieben wird, um somit eine gute Kontrolle über die (bevorzugt relativ geringe) Reichweite der Antenne 10 zu besitzen.

Im dargestellten Beispiel ist am Außenumfang des Mantelleiters 16, in Längsrichtung der Leiterstruktur 12 betrachtet im Abstand zum zweiten Ende 22 (bzw. an einer Stelle zwischen den beiden Enden 18 und 22) eine Oberflächenwellendämpfungseinrichtung 30 angeordnet, die im dargestellten Beispiel aus mehreren (hier: vier) Ferritringen 32, 34, 36 und 38 gebildet ist, welche jeweils den Außenumfang des Mantelleiters umgeben. Falls, zweckmäßigerweise über die gesamte Länge der Leiterstruktur 12 am Außenumfang des Mantelleiters 16 ein Isoliermantel (z. B. aus Kunststoff) vorgesehen ist, so umgeben die Ferritringe 32, 34, 36 und 38 diesen Isoliermantel. Die Ferritringe 32 bis 38 sind in Längsrichtung der Leiterstruktur 12 betrachtet mit gegenseitigem Abstand zueinander angeordnet und bewirken vorteilhaft eine Dämpfung der erwähnten, vom zweiten Ende 22 der Leiterstruktur 12 zurücklaufenden Wanderwellen, wenn diese an der Stelle der Dämpfungseinrichtung 30 ankommen. Die aus den Ferritringen 32 bis 38 gebildete Dämpfungseinrichtung 30 bzw. deren Anordnungsstelle im Verlauf der koaxialen Leiterstruktur 12 unterteilt die Gesamtlänge der Leiterstruktur 12 somit in einen (in Fig. 1 linken) "Signalleitungsabschnitt" 40 und einen "Signalsende/Empfangsabschnitt" 42, wobei im Betrieb der Antenne 10 der Abschnitt 40 zur Leitung des Antennensignals ausgehend von oder zu dem ersten Ende 18 dient und der Abschnitt 42 für die Übertragung von Information und/oder Energie ausgehend von der Antenne 10 oder zu der Antenne 10 dient.

Die Anzahl von Ferritringen und die einzelnen Abstände zwischen den Ferritringen kann dem jeweiligen Anwendungsfall bzw. den Betriebsparametern der Antenne 10 angepasst werden. Auch kann vorgesehen sein, dass wenigstens ein Ferritring, im Falle mehrerer Ferritringe bevorzugt wenigstens der "erste" (dem zweiten Ende 22 nächstliegende) Ferritring, im dargestellten Beispiel also der Ferritring 32, entlang der Leiterstruktur verschiebbar angeordnet ist. Damit lassen sich vorteilhaft die Eigenschaften der damit gebildeten Dämpfungseinrichtung beeinflussen bzw. dem konkreten Anwendungsfall anpassen.

Alternativ oder zusätzlich zu den Ferritringen 32 bis 38 kann die Dämpfungseinrichtung 30, abweichend vom dargestellten Beispiel, auch andere dämpfende Komponenten aufweisen, wie beispielsweise eine elektrische Netzwerkstruktur (aus kapazitiven und/oder induktiven und/oder resistiven Elementen), die an der betreffenden Stelle im Verlauf der Leiterstruktur 12 angeordnet und beiderseits mit den zum ersten Ende 18 und zum zweiten Ende 22 verlaufenden Abschnitten 40, 42 der Leiterstruktur 12 verbunden ist.

Zusammenfassend lassen sich Aufbau, Funktionsweise und Vorteile der Antenne 10 wie folgt skizzieren:
- Eine Hauptkomponente der Antenne 10 wird durch die koaxiale Leiterstruktur 12 gebildet, bei welcher es sich z. B. um ein biegsames oder semirigides Kabel, oder auch um eine starre Struktur handeln kann, die ein "offenes Ende" bzw. die erwähnte Innenleitererweiterung 24 besitzt.
- Im Bereich der Innenleitererweiterung 24 ist der im übrigen Bereich der Leiterstruktur eine Abschirmung bildende Mantelleiter 16 gewissermaßen entfernt, so dass sich eine Dipolantenne ergibt, von der ein Arm durch den offenen Innenleiter (Innenleitererweiterung 24) und der andere Arm von dem Mantelleiter 16 gebildet wird.
- Die hier durch einen oder mehrere Ferritringe gebildete Oberflächenwellendämpfungseinrichtung 30 begrenzt die zum Senden/Empfangen wirksame Antennenlänge (Abschnitt 42). Neben einer Einstellung dieser Antennenlänge beeinflusst die Position der Dämpfungseinrichtung 30, hier insbesondere die Position des ersten Ferritringes 32 auch die Eigenschaften der Dämpfungseinrichtung 30 und somit die Eigenschaften der zurücklaufenden Wanderwellen.
- Im Allgemeinen vorteilhaft im Hinblick auf die gewünschte Erzeugung zurücklaufender Wanderwellen ist es, wenn die Innenleitererweiterung 24 eine Länge (gemessen vom zweiten Ende 22 der Leiterstruktur 12 bis zum freien Ende der Innenleitererweiterung 24) besitzt, welche wenigsten annähernd eine Viertelwellenlänge des betreffenden Antennensignals darstellt. Eine Trägerfrequenz des Antennensignals kann z. B. im Bereich von 500 bis 5000 MHz liegen.
- Die konkrete Position der Ferritringe 32 bis 38, insbesondere des ersten Ferritringes 32 beeinflusst auch stark die Impedanz der Antenne 10. Insofern kann eine Einstellbarkeit wenigstens eines, insbesondere wenigstens des ersten von mehreren Ferritringen vorteilhaft zur Impedanzeinstellung genutzt werden (z. B. möglichst nahe bei 50 Ω).
- Bei geeigneter Geometrie der Antenne 10 und entsprechender Betriebsweise lässt sich erreichen, dass der größte Anteil eines Sendesignals als Mantelwelle entlang des "Signalsende/Empfangsabschnittes" 42 wandert, und nur vergleichsweise wenig Hochfrequenzenergie abgestrahlt wird ("Coupled Mode").
- Insbesondere bei Anordnung mehrerer Ferritringe zur Ausbildung der Dämpfungseinrichtung 30 kommt es zu einer sehr wirksamen Unterdrückung der Mantelwellen auf dem Rest (Signalleitungsabschnitt 40) der Leiterstruktur 12. Der Übergang zwischen den Abschnitten 40 und 42 wird durch die Position der Dämpfungseinrichtung 30 im Verlauf der Leiterstruktur 12 festgelegt. In dieser Hinsicht ist gemäß einer Weiterbildung vorgesehen, dass die Dämpfungseinrichtung 30 insgesamt verschiebbar entlang der Leiterstruktur 12 vorgesehen ist.
- Die Länge der Innenleitererweiterung 24 lässt sich so wählen, dass in Kombination mit der Position (bevorzugt veränderbaren Position) des ersten Ferritringes (hier: 32) eine gewünschte Impedanz, z. B. zur Erzielung einer möglichst hohen Rückflussdämpfung der Antenne 10 eingestellt wird.

Die Länge der Antenne 10 und die Längen der einzelnen erwähnten Abschnitte davon können dem jeweiligen Anwendungsfall angepasst vorgesehen sein. Für das Beispiel von Fig. 1 sind in Fig. 1 entsprechende Längen I1 bis I4 eingezeichnet: I1 ist hierbei die Länge des Signalleitungsabschnittes 40, I2 die Länge der Oberflächenwellendämpfungseinrichtung 30, I3 die Länge des Signalsende/Empfangsabschnittes und I4 die Länge der Innenleitererweiterung. Im dargestellten Beispiel liegen diese Längen beispielhaft in jeweils folgenden Bereichen: I1 im Bereich von 0,05 bis 1 m, I2 im Bereich von 0,05 bis 0,5 m, I3 im Bereich von 0,2 bis 10 m, und I4 (bevorzugt abhängig von der Wellenlänge als Viertelwellenlänge gewählt) im Bereich von 0,03 bis 0,15 m. In Fig. 1 bezeichnet d1 einen Abstand (lichte Weite) zwischen den Ferritringen 32 und 34. Dieser Abstand d1 liegt beispielsweise im Bereich von 5 bis 20 mm. In einer Weiterbildung der Erfindung besitzt der Mantelleiter der koaxialen Leiterstruktur wenigstens eine Apertur. In Fig. 1 ist eine derartige Apertur beispielhaft gestrichelt eingezeichnet und mit 39 bezeichnet. Der Abstand der Apertur 39 von der Dämpfungseinrichtung 30 ist in Fig. 1 mit d2 bezeichnet. Dieser Abstand d2 liegt z. B. im Bereich von 1 bis 5 m. Abweichend von diesem Beispiel können auch mehrere derartige Aperturen über die Länge des Signalsende/Empfangsabschnittes 42 verteilt angeordnet sein (mit gegenseitigem Abstand z. B. im Bereich des 0,1-fachen bis 5-fachen der Betriebswellenlänge).

Die zur Ausbildung der Dämpfungseinrichtung 30 verwendeten Ferritringe, hier die Ferritringe 32 bis 38 sollten auf die Querausdehnung bzw. den Durchmesser der Leiterstruktur 12 (einschließlich ggf. vorhandenem Isoliermantel) abgestimmt sein, bevorzugt mit einem Ringspalt zwischen der Leiterstruktur 12 und dem Innenumfang des Ferritringes von bevorzugt weniger als 3 mm. In einer Ausführungsform ist die Impedanz jedes Ferritringes bei der Betriebsfrequenz größer als 100 Ω. Geeignete Ferritringe sind kommerziell erhältlich, beispielsweise unter der Bezeichnung "WE-AFB EMI Suppression Axial Ferrite Bead" von der Fa. Würth Elektronik, 74638 Waldenburg, Deutschland.

In einer vorteilhaften Ausführungsform der erfindungsgemäßen Antenne ist vorgesehen, dass die Dämpfungseinrichtung mehrere derartige "Diskontinuitäten", wie z. B. Ferritringe, aufweist, die sich in ihrer Impedanz voneinander unterscheiden. Dies ermöglicht z. B. insbesondere eine Wellendämpfung mit minimiertem Anteil an Reflexion der an der Dämpfungseinrichtung einlaufenden Wanderwellen.

Abweichend von dem in Fig. 1 dargestellten Ausführungsbeispiel könnten weitere Diskontinuitäten bzw. Ferritringe der beschriebenen Art im Verlauf des Signalsende/Empfangsabschnittes 42 angeordnet sein, um damit z. B. eine gewünschte "Wellenformung" zu realisieren.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Fig. 2 zeigt eine Antenne 10a gemäß eines weiteren, nicht erfindungsgemäßen Ausführungsbeispiels.

In Aufbau und Funktionsweise entspricht die Antenne 10a im Wesentlichen der bereits beschriebenen Antenne 10. Modifiziert ist jedoch eine Innenleitererweiterung 24a dahingehend, dass diese ausgehend von einem zweiten Ende 22a einer koaxialen Leiterstruktur 12a bis hin zum freien Ende 26a der Innenleitererweiterung 24a abschnittweise gekrümmt verläuft. Mit einer derartigen Krümmung, alternativ oder zusätzlich auch wenigstens einer Abwinkelung der Innenleitererweiterung 24a kann das freie Ende 26a und/oder der unmittelbar vor diesem freien Ende liegende Endabschnitt der Innenleitererweiterung 24a vorteilhaft näher an das zweite Ende 22 und somit das in diesem Bereich befindliche Ende des Mantelleiters 16a gebracht werden, so dass die kapazitive Ankopplung der Innenleitererweiterung 24a an den Mantelleiter 16a wesentlich wirksamer ist als bei dem Beispiel der Antenne 10 gemäß Fig. 1.

Die Ausführungsform gemäß Fig. 2 überwindet den Nachteil der "Basisversion" gemäß Fig. 1, bei welcher die Impedanzanpassung eher ungünstig ist und im Bereich der Innenleitererweiterung 24 eine merkliche Leistungsabstrahlung erfolgt. Die Antenne 10a gemäß Fig. 2 lässt sich so betreiben, dass für die zurücklaufenden Wanderwellen ein "Coupled Mode" erreicht wird, wobei im Bereich der Innenleitererweiterung 24a besonders wenig Leistungsabstrahlung erfolgt.

Es versteht sich, dass abweichend von der konkreten in Fig. 2 dargestellten Formgestaltung der Innenleitererweiterung 24a diese Vorteile auch durch modifizierte Verläufe, allgemein z. B. in Form einer Schleife, einer Spule, einer Spirale, eines Bogens etc. erreicht werden können.

Bevorzugt liegt das freie Ende 26a oder ein dieses Ende beinhaltender Endabschnitt der Innenleitererweiterung 24a unmittelbar an einem Isoliermantel der Leiterstruktur 12a an. Falls die Leiterstruktur 12a im Bereich des zweiten Endes 22a keinen Isoliermantel aufweist, so ist das freie Ende der Innenleitererweiterung 24a bevorzugt mit einer Isolierung versehen und liegt mit dieser am (unisolierten) Mantelleiter an.

Mit dem wenigstens abschnittweise abgewinkelten und/oder gekrümmten Verlauf der Innenleitererweiterung, wie z. B. bei dem Beispiel gemäß Fig. 2, lässt sich eine hervorragende Impedanzanpassung (z. B. auf 50 Ω) erreichen, da diese Formgestaltung wie eine Kombination aus Induktivität und Kapazität wirkt. Damit lässt sich eine praktisch verlustfreie Impedanzwandlung des Speisepunktes (erstes Ende der Leiterstruktur) erreichen.

Die Fertigung einer Antenne der in Fig. 2 dargestellten Art lässt sich sehr einfach bewerkstelligen, indem z. B. eine aus Metall hergestellte und einstückig mit dem Innenleiter 14a verbundene Innenleitererweiterung 24a entsprechend verformt wird. Im verformten Zustand kann eine dauerhafte Fixierung der Innenleitererweiterung 24a z. B. mit Hilfsmitteln wie z. B. Kabelbinder, Schrumpfschlauch etc. erfolgen.

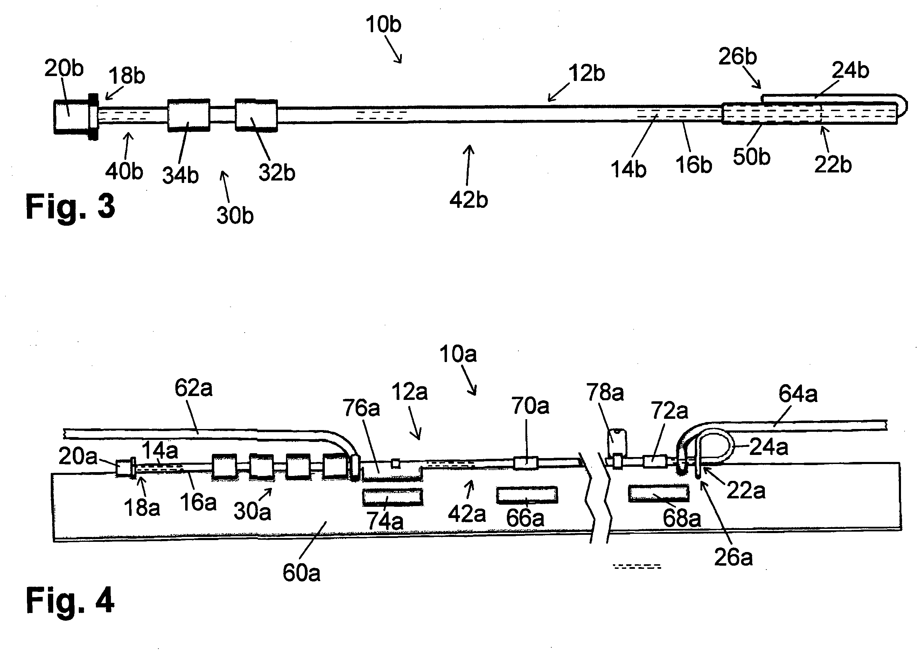

Fig. 3 zeigt eine Antenne 10b gemäß eines weiteren Ausführungsbeispiels.

Im Unterschied zu der Antenne 10a gemäß Fig. 2 ist eine Innenleitererweiterung 24b der Antenne 10b ausgehend von einem zweiten Ende 22b einer koaxialen Leiterstruktur 12b mit sehr kleinem Radius um 180° gebogen, um sodann geradlinig und in sehr geringem Abstand und parallel zur Längsrichtung der Leiterstruktur 12b zu verlaufen. Der geradlinige Abschnitt der Innenleitererweiterung 24b nimmt hierbei bevorzugt mehr als 50 %, insbesondere mehr als 75 % der Gesamtlänge der Innenleitererweiterung 24b in Anspruch.

Außerdem ist bei der Antenne 10b in einem Endabschnitt der Leiterstruktur 12b seitens des zweiten Endes 22b eine Abstandhalterhülle 50b vorgesehen, die am zweiten Ende 22b am Außenumfang der Leiterstruktur 12b bzw. gegebenenfalls an deren Isoliermantel aufgeschoben ist. Die Innenleitererweiterung 24b ist hierbei derart gebogen, dass der geradlinig verlaufende Endabschnitt dicht am Außenumfang der Abstandhalterhülle 50b anliegt.

Zur Fertigung einer Antenne der in Fig. 3 dargestellten Art kann so vorgegangen werden, dass die Antenne 10b zunächst mit einer noch unverformten Innenleitererweiterung 24b hergestellt wird, sodann als Abstandhalterhülle 50b z. B. ein Kunststoffrohr vom zweiten Ende 22b her über die Leiterstruktur 12b aufgeschoben wird, und schließlich der aus dem Ende des Kunststoffrohres ragende Teil der Innenleitererweiterung 24b um 180° umgebogen wird, um die in Fig. 3 dargestellte Konfiguration zu erhalten. Je nach Position des aufgeschobenen Kunststoffrohres, welche sich durch entsprechendes Verschieben einstellen lässt, wird die Länge des letztlich an der Außenseite des Kunststoffrohres anliegenden Leiterstücks und auch die in Längsrichtung betrachtete Überlappung der Innenleitererweiterung 24b mit dem Mantelleiter 16b eingestellt.

Es lässt sich eine ausgezeichnete Impedanzanpassung erreichen und das Antennensignal wird sehr effektiv auf den Mantelleiter 16b gekoppelt. Außerdem lässt sich eine sehr homogene Betriebsweise im "Coupled Mode" erreichen.

Die in Fig. 3 dargestellte Konfiguration lässt sich schließlich mit Hilfsmitteln wie z. B. einem Kabelbinder, einem Schrumpfschlauch oder dergleichen dauerhaft fixieren.

Fig. 4 zeigt nochmals die Antenne 10a (Fig. 2) in einer konkreten Anwendungssituation.

Bei dieser Anwendungssituation ist wesentlich, dass die Antenne 10a als eine Kommunikationskomponente in eine größere technische Einrichtung 60a integriert wird.

Bei der technischen Einrichtung 60a kann es sich z. B. um einen Schrank oder ein Regal oder ein anders Möbelstück, insbesondere zur Aufbewahrung von zu inventarisierenden Artikeln, handeln. Darüber hinaus kann es sich z. B. auch um Teile eines Gebäudes wie z. B. bestimmte Wände, Verstrebungen, Türen oder Türrahmen handeln.

Die Antenne 10a kann hierbei insbesondere für eine Kommunikation mit in der näheren Umgebung der Antenne befindlichen Transpondern (z. B. RFID-Transponder) verwendet werden, wobei derartige Transponder beispielsweise an Gegenständen vorgesehen sind, die im Bereich der betreffenden technischen Einrichtung 60a gelagert oder bewegt (aus der technischen Einrichtung 60a heraus oder in diese hinein) werden. Damit kann insbesondere eine Inventarisierung bewerkstelligt werden, d. h. die Erfassung von mit Transpondern versehenen Gegenständen mittels der Kommunikation zwischen der Antenne 10a und den jeweiligen Transpondern. Die erfindungsgemäß bevorzugt geringe Reichweite dieser Kommunikation vermeidet hierbei vorteilhaft Fehlerfassungen.

Im Beispiel gemäß Fig. 4 ist die Antenne 10a mittels elastischer Bänder 62 und 64 gehalten, welche an verschiedenen Stellen im Verlauf der koaxialen Leiterstruktur 12a befestigt sind. Die Antenne kann somit leicht abnehmbar und befestigbar gestaltet werden.

In vielen Fällen ist im Rahmen der Erfindung interessant, den zum Senden/Empfangen vorgesehenen Signalsende/Empfangsabschnitt (42a) der Antenne entlang eines bestimmten Pfades an oder in der betreffenden technischen Einrichtung (60a) verlaufen zu lassen, wobei dieser Pfad im Beispiel gemäß Fig. 4 geradlinig, ganz allgemein aber auch entlang komplexerer Wege verlaufen kann.

Gemäß einer Weiterbildung der Erfindung sind Mittel zur Kontrolle einer ordnungsgemäßen Montage bzw. Konfiguration des Antennenverlaufes vorgesehen. Diese Mittel können z. B. wie in Fig. 4 beispielhaft dargestellt eine visuelle Kontrollmöglichkeit der Montage durch bestimmte Markierungen einerseits an der Antenne 10a und andererseits an den betreffenden Stellen der technischen Einrichtung 60a realisiert werden.

Alternativ oder zusätzlich können diese Mittel auch z. B. entlang des ordnungsgemäßen Verlaufes an oder in der betreffenden technischen Einrichtung 60a angeordnete Transponder umfassen, so dass durch einen Betrieb der Antenne 10a die Anwesenheit dieser "Pfadtransponder" in der Reichweite der Antenne 10a detektierbar ist. Damit ist z. B. eine ferngesteuerte Funktions- und Montageüberwachung ermöglicht. Die fest im Bereich der technischen Einrichtung 60a montierten Transponder fungieren dann als Sensoren, die entsprechend (digital) kodiert sein können und nur bei korrekter Montage und Funktion der Antenne 10a erfasst werden können. Die Kodierung kann z. B. aus einer Seriennummer, einer laufenden Nummer, Positionskoordinaten etc. bestehen. Alternativ oder zusätzlich zu einer Identifikation der Pfadtransponder (z. B. anhand einer digitalen Kodierung) kann auch eine Auswertung (z. B. Soll-Ist-Vergleich) der Signalstärke des vom Transponder gesendeten (und von der Antenne empfangenen) Signals zur Kontrolle einer ordnungsgemäßen Montage bzw. Konfiguration des Antennenverlaufes herangezogen werden, beispielsweise um auch kleinere Lageänderungen detektieren zu können.

Derartige "Pfadtransponder" zur Kontrolle bzw. Überwachung des ordnungsgemäßen Antennenverlaufes sind in Fig. 4 beispielhaft eingezeichnet und mit 66a und 68a bezeichnet.

An den entsprechenden Stellen im Verlauf der Leiterstruktur 12a können auch visuell erfassbare Markierungen, wie z. B. die in Fig. 4 beispielhaft eingezeichneten Farbmarkierungen 70a und 72a vorgesehen sein, um die ordnungsgemäße Montage der Antenne 10a zu erleichtern.

Alternativ oder zusätzlich zu den erwähnten Pfadtranspondern kann die technische Einrichtung 60a auch mit einem Transponder 74a ausgestattet sein, den man als "Antennentyptransponder" bezeichnen könnte, da dieser eine Kodierung des ordnungsgemäß zu montierenden Typs von Antenne speichert. Nach Montage der Antenne 10a kann somit diese Information über den "richtigen Typ" aus dem Transponder 74a ausgelesen werden. Ob hierbei die tatsächlich eingebaute Antenne 10a vom "richtigen Typ" ist, lässt sich besonders vorteilhaft z. B. dadurch feststellen, indem die Antenne 10a selbst mit einem daran angebrachten und somit auslesbaren Transponder 76a versehen wird, in welchem eine Kodierung des Typs der Antenne 10a gespeichert ist. Durch Vergleich der beiden Ausleseergebnisse aus den Transpondern 74a und 76a kann somit festgestellt werden, ob der für die bestimmte technische Einrichtung 60a vorgesehene Antennentyp tatsächlich montiert wurde.

Alternativ oder zusätzlich zu den erwähnten "Information speichernden" Transpondern können auch ein oder mehrere batterielose, über das Antennenfeld mit elektrischer Energie versorgte Sensoren (bzw. "mit Sensorik ausgestattete Transponder") an der Antenne 10a angeordnet sein. Damit können je nach Sensortyp prinzipiell beliebige physikalische Parameter entlang der Antenne 10a detektiert werden. In Fig. 4 ist ein derartiger "Sensortransponder" eingezeichnet und mit 78a bezeichnet.

Alternativ oder zusätzlich zur Anordnung derartiger Sensoren direkt an der Antenne 10a können insbesondere z. B. passive Sensoren (die ihre elektrische Versorgung aus dem Antennenfeld erhalten) auch innerhalb der Antennenreichweite an bzw. in der technischen Einrichtung 60a angeordnet sein. Auch die mit derartigen Sensoren erfassten Informationen können vorteilhaft in einfacher Weise mittels der Kommunikation durch die Antenne 10a ausgelesen und nachfolgend ausgewertet werden.

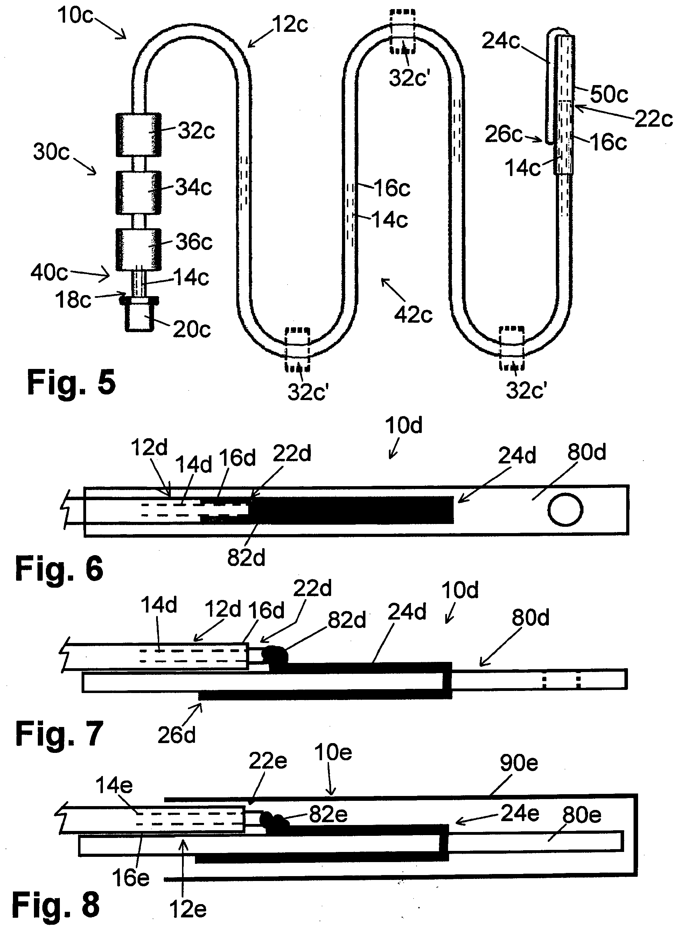

Fig. 5 zeigt eine Antenne 10c gemäß eines weiteren Ausführungsbeispiels.

Die Antenne 10c ist gegenüber der Antenne 10b von Fig. 3 dahingehend modifiziert, dass der Verlauf eines Signalsende/Empfangsabschnittes 42c einer koaxialen Leiterstruktur 12c nicht geradlinig sondern mit abgewinkelten und/oder mit gekrümmten Verlaufsabschnitten vorgesehen ist. Im dargestellten Beispiel verläuft die Leiterstruktur 12c insgesamt meanderförmig.

Ein derartig komplexerer Verlauf des Signalsende/Empfangsabschnittes 42c ermöglicht insbesondere bei sehr geringer Reichweite der Antennenkommunikation eine gezielte Abdeckung desjenigen Bereiches, in welchem die Kommunikation mit der Antenne 10c stattfinden soll. Abweichend von dem in Fig. 5 dargestellten zweidimensionalen Verlauf der Antenne 10c könnte die Leiterstruktur 12c auch dreidimensional verlaufend gestaltet sein.

Insbesondere für derartig komplex verlaufende Antennen mit großer Länge kann vorgesehen sein, dass die Antenne aus mehreren Teilstücken zusammengesetzt ist (z. B. mittels elektrischer Steckverbindungen). Auch können T-Stücke zum Einsatz kommen, um Abzweigungen im Verlauf der Antenne zu realisieren. So kann z. B. am Ende eines Signalleitungsabschnittes mittels eines Verteilerstücks eine Verzweigung in zwei oder mehr als zwei Signalsende/Empfangsabschnitte realisiert werden.

In Fig. 5 ist außerdem gestrichelt eine bei allen hier beschriebenen Ausführungsvarianten einsetzbare Weiterbildung eingezeichnet, nämlich die Anordnung von Einrichtungen zur "Wellenformung" im Verlauf der Antenne. Diese Einrichtungen können insbesondere von Ferritringen gebildet sein, wie diese in Fig. 5 beispielhaft bei 32c' eingezeichnet sind.

Fig. 6 zeigt eine Antenne 10d gemäß eines weiteren Ausführungsbeispiels.

Im Unterschied zu den bisher beschriebenen Ausführungsbeispielen ist bei der Antenne 10d eine Innenleitererweiterung 24d in besonderer Weise ausgestaltet. Der Einfachheit halber ist in Fig. 6 daher nur die Umgebung im Bereich eines zweiten Endes 22d einer koaxialen Leiterstruktur 12d dargestellt.

Die Modifikation besteht darin, dass die Innenleitererweiterung 24d separat von einem Innenleiter 14d ausgebildet ist. Im dargestellten Beispiel, wie es besser aus der Seitenansicht von Fig. 7 ersichtlich ist, ist die Innenleitererweiterung 24d durch Leiterbahnen an einer Schaltungsträgerplatte 80d gebildet, wobei ein am zweiten Ende der Leiterstruktur 12d aus dem Mantelleiter 16d herausragender Teil des Innenleiters 14d über eine Lötverbindung 82d mit einer ersten der genannten Leiterbahnen elektrisch verbunden ist (in Fig. 7 oben). Diese Leiterbahn ist am entgegengesetzten Ende "durchkontaktiert" mit einer weiteren Leiterbahn (in Fig. 7 unten) verbunden, welche einen weiteren Verlaufsabschnitt der Innenleitererweiterung 24d darstellt und mit ihrem freien Ende 26d wie dargestellt in Längsrichtung mit dem Ende des Mantelleiters 16d überlappt.

In Aufbau und Funktion entspricht die Antenne 10d somit der bereits beschriebenen Antenne 10b gemäß Fig. 3, wobei jedoch die Innenleitererweiterung 24d durch ein separat gefertigtes Bauteil (Schaltungsträgerplatte 80d) realisiert ist, welches im Rahmen der Fertigung der Antenne 10d mit dem Innenleiter 14d verbunden wird.

Fig. 8 zeigt eine Antenne 10e gemäß eines weiteren Ausführungsbeispiels, bei welchem im Unterschied zu der Antenne 10d gemäß der Fig. 6 und 7 der Bereich des zweiten Endes 22e und der Innenleitererweiterung 24e mit einer schematisch eingezeichneten Abschirmstruktur 90e abgeschirmt ist, um eine Abstrahlung aus diesem Bereich zu minimieren. Die Abschirmstruktur 90e kann wie für das Beispiel gemäß Fig. 8 vorgesehen z. B. eine hohlzylindrische, an einem Ende geschlossene Form besitzen und gewissermaßen als "Abschirmtopf" (z. B. aus metallischem Material) am Antennenende aufgeschoben und fixiert (z. B. verklebt) werden.

Zusammenfassend können mit den beschriebenen Ausführungsbeispielen Antennen mit z. B. folgenden Vorteilen realisiert werden:
- Aufbau des elektromagnetischen Feldes im Wesentlichen kurzreichweitig um die Antenne herum, aber relativ wenig Abstrahlung.
- Gute Kontrolle über das Feld hinsichtlich Reichweite, Feldstärke, Reflexionen, Leitungsverlusten; keine "Erfassungslücken" entlang der Antenne.
- Leichte Abstimmbarkeit auf eine gewünschte Antennenimpedanz (z. B. 50 Ω) in unterschiedlichen Umgebungen und Frequenzbändern.
- Antenne kann sehr einfach gefertigt werden, sei es z. B. aus flexiblen oder aus starren Koaxialleitungen, nach dem ein und demselben Prinzip.
- Antenne kann bei allen betriebsmäßig vorgesehenen Frequenzen in einem "Coupled Mode" arbeiten. Ein Abstrahlungs("Radiating Mode")-Anteil kann gering gehalten werden.
- Antenne kann wenigstens teilweise aus zugleich anderweitig genutzten Strukturen, insbesondere aus massiven oder hohlen metallischen Strukturen zur Ausbildung des benötigten Mantelleiters oder des Innenleiters gefertigt werden. Lediglich beispielhaft sei angemerkt, dass geeignete metallische Strukturen z. B. bei Kleiderstangen, Blindenstöcken oder mechanischen Streben bzw. Profilträgern (z. B. von Regalen, Warenpräsentationsständern etc.) im Rahmen der Erfindung nutzbar sein können.
- Antenne kann auch bei hoher Sendeleistung und in der Nähe von metallischen Flächen so betrieben werden, dass keine starken Reflexionen an diesen Flächen hervorgerufen werden. Betrieb wenige mm von metallischen Flächen ermöglicht.
- Robuster, unempfindlicher Betrieb möglich, z. B. so, dass die Impedanz auch bei Anordnung der Antenne in der Nähe von Metall nicht stark verändert wird (z.B. gute Funktion sowohl in einem offenen als auch geschlossenen Metallschrank.
- Es lassen sich in einfacher Weise auch flächige und räumliche Antennenstrukturen ausbilden (z. B. unter Tisch- oder Arbeitsplatten, an Tunneln oder Türen zu Warenlagern, Verlegung in Gebäudeböden (z. B. Estrich etc.)).
- Antenne ist leicht zu montieren bzw. in Objekte der genannten Art (insbesondere z. B. Schräke, Regale oder dergleichen) zu integrieren.

## Patentansprüche

1. Wanderwellenantenne für Nahbereichsanwendungen, insbesondere RFID-Anwendungen, umfassend eine langgestreckte zweipolige Leiterstruktur (12b) mit einem Innenleiter (14b) und einem diesen koaxial umgebenden Mantelleiter (16b),
wobei ein erstes Ende (18b) der Leiterstruktur (12b) als Anschlussende zum Anschluss eines Senders und/oder Empfängers für ein mit der Wanderwellenantenne zu sendendes bzw. ein von der Wanderwellenantenne zu empfangendes Antennensignal vorgesehen ist,
wobei an einem zweiten Ende (22b) der Leiterstruktur (12b) eine mit dem Innenleiter (14b) verbundene Innenleitererweiterung (24b) vorgesehen ist und ein freies Ende (26b) der Innenleitererweiterung (24b) kapazitiv an den Mantelleiter (16b) angekoppelt ist,
und wobei die Innenleitererweiterung (24b) ausgehend vom zweiten Ende (22b) der Leiterstruktur (12b) bis hin zum freien Ende (26b) der Innenleitererweiterung (24b) einen mit sehr kleinem Radius um 180° gebogenen Verlaufsabschnitt besitzt, so dass das freie Ende (26b) und ein unmittelbar vor diesem freien Ende (26b) liegender, geradlinig und in sehr geringem Abstand und parallel zu einer Längsrichtung der Leiterstruktur (12b) verlaufender Endabschnitt der Innenleitererweiterung (24b) nahe an das zweite Ende (22b) der Leiterstruktur (12b) heranragen und damit die kapazitive Ankoppelung im Bereich des zweiten Endes (22b) der Leiterstruktur (12b) realisiert ist, so dass in einem Sendemodus der Wanderwellenantenne (10b) ein am ersten Ende (18b) eingespeistes, zu sendendes Antennensignal entlang der Leiterstruktur (12b) bis hin zum zweiten Ende (22b) läuft und dort reflektiert wird, um als gebundene Wanderwelle ausgehend vom zweiten Ende (22b) am Mantelleiter (16b) entlang zurück in Richtung zum ersten Ende (18b) zu laufen, wobei in Längsrichtung der Leiterstruktur (12b) betrachtet im Abstand zum zweiten Ende (22b) der Leiterstruktur (12b), eine Oberflächenwellendämpfungseinrichtung (30b) angeordnet ist, wobei damit eine Gesamtlänge der Leiterstruktur (12b) in einen zwischen dem ersten Ende (18b) der Leiterstruktur (12b) und der Oberflächenwellendämpfungseinrichtung (30b) befindlichen Signalleitungsabschnitt und einen zwischen der Oberflächenwellendämpfungseinrichtung (30b) und dem zweiten Ende (22b) der Leiterstruktur (12b) befindlichen Signalsende/Empfangsabschnitt unterteilt wird, und wobei die Länge des Signalsende/Empfangsabschnittes mindestens das 2-fache einer betriebsmäßig vorgesehenen Wellenlänge der Wanderwellen beträgt.

2. Wanderwellenantenne nach Anspruch 1, wobei der geradlinig verlaufende Endabschnitt der Innenleitererweiterung (24b) mehr als 50 % der Gesamtlänge der Innenleitererweiterung (24b) in Anspruch nimmt.

3. Wanderwellenantenne nach Anspruch 1 oder 2, wobei am zweiten Ende (22b) der Leiterstruktur (12b) eine Abstandhalterhülle (50b) vorgesehen ist, die am Außenumfang der Leiterstruktur (12b) aufgeschoben ist, und wobei die Innenleitererweiterung (24b) derart gebogen ist, dass der geradlinig verlaufende Endabschnitt der Innenleitererweiterung (24b) dicht an einem Außenumfang der Abstandhalterhülle (50b) anliegt.

4. Wanderwellenantenne nach einem der vorangehenden Ansprüche, wobei am zweiten Ende (22b) der Leiterstruktur (12b) eine Abstandhalterhülle (50b) vorgesehen ist, die am Außenumfang einer radial außerhalb des Mantelleiters (16b) vorgesehenen elektrischen Isolierung aufgeschoben ist, und wobei die Innenleitererweiterung (24b) derart gebogen ist, dass der geradlinig verlaufende Endabschnitt der Innenleitererweiterung (24b) dicht an einem Außenumfang der Abstandhalterhülle (50b) anliegt.

5. Wanderwellenantenne nach einem der vorangehenden Ansprüche, wobei die Innenleitererweiterung (24b) einstückig verbunden mit dem Innenleiter (14b) ausgebildet ist.

6. Wanderwellenantenne nach einem der Ansprüche 1 bis 4, wobei die Innenleitererweiterung (24b) separat vom Innenleiter (14b), jedoch mit diesem Innenleiter (14b) verbunden ausgebildet ist.

7. Wanderwellenantenne nach einem der Ansprüche 1 bis 6, wobei die Oberflächenwellendämpfungseinrichtung (30) wenigstens einen Ferritring (32b bis 38b) aufweist.

8. Verwendung einer Wanderwellenantenne (10b) nach einem der vorangehenden Ansprüche in einem "Coupled Mode", derart, dass in einem Sendemodus der Wanderwellenantenne (10b) ein am ersten Ende (18b) eingespeistes, zu sendendes Antennensignal entlang der Leiterstruktur (12b) bis hin zum zweiten Ende (22b) läuft und dort reflektiert wird, um als gebundene Wanderwelle ausgehend vom zweiten Ende (22b) am Mantelleiter (16b) entlang zurück in Richtung zum ersten Ende (18b) zu laufen,
wobei die aufgrund der am ersten Ende (18b) erfolgenden Sendesignaleinspeisung am zweiten Ende (22b) ankommende Energie zu mehr als 50 % als an der Leiterstruktur (12b) gebundene Wanderwelle ausgehend vom zweiten Ende (22b) zurück in Richtung des ersten Endes (18b) läuft und/oder die am ersten Ende (18b) eingespeiste Energie zu mehr als 40 % als an der Leiterstruktur (12b) gebundene Wanderwelle ausgehend vom zweiten Ende (22b) zurück in Richtung des ersten Endes (18b) läuft.

9. Verwendung nach Anspruch 8, für eine Kommunikation mit in der Umgebung der Wanderwellenantenne (10b) befindlichen Transpondern und/oder für eine Kommunikation mit in der Umgebung der Wanderwellenantenne befindlichen Komponenten eines Computernetzwerkes.

## Claims

1. A traveling wave antenna for short-range applications, in particular RFID applications, comprising an elongate bipolar conductor structure (12b) with an inner conductor (14b) and a sheath conductor (16b) coaxially surrounding the same,
wherein a first end (18b) of the conductor structure (12b) is provided as a terminal end for connecting a transmitter and/or receiver for an antenna signal to be transmitted using the traveling wave antenna or an antenna signal to be received using the traveling wave antenna,
wherein an inner conductor extension (24b) connected to the inner conductor (14b) is provided at a second end (22b) of the conductor structure (12b), and a free end (26b) of the inner conductor extension (24b) is capacitively coupled to the sheath conductor (16b),
and wherein the inner conductor extension (24b), starting from the second end (22b) of the conductor structure (12b) up to the free end (26b) of the inner conductor extension (24b), has a running portion bent with a very small radius by 180°, so that the free end (26b) and an end portion of the inner conductor extension (24b) lying directly before the free end (26b) and running rectilinearly at a very short distance and parallel to a longitudinal direction of the conductor structure (12b) lie close to the second end (22b) of the conductor structure (12b) thereby establishing the capacitive coupling in the region of the second end (22b) of the conductor structure (12b), such that, in a transmission mode of the traveling wave antenna (10b), an antenna signal to be transmitted and fed to the first end (18b) runs along the conductor structure (12b) to the second end (22b) and is reflected there to travel as a bound traveling wave from the second end (22b) along the sheath conductor (16b) back towards the first end (18b), wherein a surface wave damping device (30b) is arranged at a distance from the second end (22b) of the conductor structure (12b) as viewed in the longitudinal direction of the conductor structure (12b), wherein therewith a total length of the conductor structure (12b) is divided into a signal conducting section between the first end (18b) of the conductor structure (12b) and the surface wave damping device (30b) and a signal transmitting/receiving section between the surface wave damping device (30b) and the second end (22b) of the conductor structure (12b), and wherein the length of the signal transmitting/receiving section is at least twice an operational wavelength of the traveling waves.

2. The traveling wave antenna according to claim 1, wherein the rectilinearly running end portion of the inner conductor extension (24b) occupies more than 50% of the total length of the inner conductor extension (24b).

3. The traveling wave antenna according to claim 1 or 2, wherein a spacer sheath (50b) is provided at the second end (22b) of the conductor structure (12b), which is pushed on the outer circumference of the conductor structure (12b), and wherein the inner conductor extension (24b) is bent in such a manner that the rectilinearly running end portion of the inner conductor extension (24b) bears tightly against an outer circumference of the spacer sheath (50b).

4. The traveling wave antenna according to any of the preceding claims, wherein a spacer sheath (50b) is provided at the second end (22b) of the conductor structure (12b), which is pushed on an outer circumference of an electrical insulation provided radially outside of the sheath conductor (16b), and wherein the inner conductor extension (24b) is bent in such a manner that the rectilinearly running end portion of the inner conductor extension (24b) bears tightly against an outer circumference of the spacer sheath (50b).

5. The traveling wave antenna according to any of the preceding claims, wherein the inner conductor extension (24b) is integrally formed with the inner conductor (14b).

6. The traveling wave antenna according to any of claims 1 to 4, wherein the inner conductor extension (24b) is formed separately from the inner conductor (14b) but connected to this inner conductor (14b).

7. The traveling wave antenna according to any of claims 1 to 6, wherein the surface wave damping device (30) comprises at least one ferrite ring (32b to 38b).

8. A use of a traveling wave antenna (10b) according to any of the preceding claims in a "coupled mode" such that in a transmission mode of the traveling wave antenna (10b) an antenna signal to be transmitted and fed to the first end (18b) is running along the conductor structure (12b) to the second end (22b) and is reflected there to travel as a bound traveling wave from the second end (22b) along the sheath conductor (16b) back towards the first end (18b),
wherein more than 50% of the energy arriving at the second end (22b) due to the transmit signal input at the first end (18b) travels as the traveling wave bound to the conductor structure (12b) from the second end (22b) back towards the first end (18b) and/or more than 40% of the energy fed at the first end (18b) travels as the traveling wave bound to the conductor structure (12b) from the second end (22b) back towards the first end (18b).

9. The use according to claim 8, for communicating with transponders located in the vicinity of the traveling wave antenna (10b) and/or for communicating with components of a computer network located in the vicinity of the traveling wave antenna (10b).

## Revendications

1. Antenne à onde progressive pour applications en champ proche, en particulier des applications RFID, comprenant une structure conductrice bipolaire allongée (12b) avec un conducteur intérieur (14b) et une gaine de conducteur (16b) entourant celuici coaxialement,
dans laquelle une première extrémité (18b) de la structure conductrice (12b) est prévue en tant qu'extrémité de raccordement pour le raccordement d'un émetteur et/ou récepteur pour un signal d'antenne à émettre avec l'antenne à onde progressive ou à réceptionner par l'antenne à onde progressive,
dans laquelle, à une deuxième extrémité (22b) de la structure conductrice (12b), un élargissement de conducteur intérieur (24b) relié au conducteur intérieur (14b) est prévu et une extrémité libre (26b) de l'élargissement de conducteur intérieur (24b) est couplée de manière capacitive avec la gaine de conducteur (16b),
et dans laquelle l'élargissement de conducteur intérieur (24b), en partant de la deuxième extrémité (22b) de la structure conductrice (12b) jusqu'à l'extrémité libre (26b) de l'élargissement de conducteur intérieur (24b), possède une partie de tracé à très petit rayon courbée de 180°, de sorte que l'extrémité libre (26b) et une partie d'extrémité de l'élargissement de conducteur intérieur (24b) située directement devant cette extrémité libre (26b), s'étendant en ligne droite et à très faible distance par rapport à une direction longitudinale, et parallèlement à celle-ci, de la structure conductrice (12b), se rapprochent de la deuxième extrémité (22b) de la structure conductrice (12b) et que le couplage capacitif est ainsi réalisé dans la zone de la deuxième extrémité (22b) de la structure conductrice (12b) de sorte que dans un mode d'émission de l'antenne à onde progressive (10b), un signal d'antenne à émettre introduit à la première extrémité (18b) se propage le long de la structure conductrice (12b) jusqu'à la deuxième extrémité (22b) et y est réfléchi pour revenir en tant qu'onde progressive liée, en partant de la deuxième extrémité (22b), le long de la gaine de conducteur (16b) en direction de la première extrémité (18b), dans laquelle, en vue en direction longitudinale de la structure conductrice (12b), à distance de la deuxième extrémité (22b) de la structure conductrice (12b), un dispositif d'affaiblissement d'onde de surface (30b) est disposé, dans laquelle une longueur totale de la structure conductrice (12b) est ainsi subdivisée en une partie de conduction de signal se trouvant entre la première extrémité (18b) de la structure conductrice (12b) et le dispositif d'affaiblissement d'onde de surface (30b) et une partie d'émission/réception de signal se trouvant entre le dispositif d'affaiblissement d'onde de surface (30b) et la deuxième extrémité (22b) de la structure conductrice (12b), et dans laquelle la longueur de la partie d'émission/réception de signal est moins de deux fois une longueur d'onde des ondes progressives fonctionnellement prévue.

2. Antenne à onde progressive selon la revendication 1, dans laquelle la partie d'extrémité s'étendant en ligne droite de l'élargissement de conducteur intérieur (24b) revendique plus de 50% de la longueur totale de l'élargissement de conducteur intérieur (24b).

3. Antenne à onde progressive selon la revendication 1 ou 2, dans laquelle une enveloppe d'espacement (50b) est prévue à la deuxième extrémité (22b) de la structure conductrice (12b), laquelle est enfilée sur le pourtour extérieur de la structure conductrice (12b), et dans laquelle l'élargissement de conducteur intérieur (24b) est courbé de telle sorte que la partie d'extrémité s'étendant en ligne droite de l'élargissement de conducteur intérieur (24b) épouse étroitement un contour extérieur de l'enveloppe d'espacement (50b).

4. Antenne à onde progressive selon l'une des revendications précédentes, dans laquelle une enveloppe d'espacement (50b) est prévue à la deuxième extrémité (22b) de la structure conductrice (12b), laquelle est enfilée sur le pourtour extérieur d'une isolation électrique prévue radialement à l'extérieur de la gaine de conducteur (16b) et dans laquelle l'élargissement de conducteur intérieur (24b) est courbé de telle sorte que la partie d'extrémité s'étendant en ligne droite de l'élargissement de conducteur intérieur (24b) épouse étroitement un pourtour extérieur de l'enveloppe d'espacement (50b).

5. Antenne à onde progressive selon l'une des revendications précédentes, dans laquelle l'élargissement de conducteur intérieur (24b) est réalisé de manière reliée d'un seul tenant au conducteur intérieur (14b).

6. Antenne à onde progressive selon l'une des revendications 1 à 4, dans laquelle l'élargissement de conducteur intérieur (24b) est réalisé de manière séparée du conducteur intérieur (14b), mais cependant de manière reliée à ce conducteur intérieur (14b).

7. Antenne à onde progressive selon l'une des revendications 1 à 6, dans laquelle le dispositif d'affaiblissement d'onde de surface (30) présente au moins un anneau en ferrite (32b à 38b).

8. Utilisation d'une antenne à onde progressive (10b) selon l'une des revendications précédentes dans un « coupled mode » de telle sorte que, dans un mode d'émission de l'antenne à onde progressive (10b), un signal d'antenne à émettre, introduit à la première extrémité (18b), se propage le long de la structure conductrice (12b) jusqu'à la deuxième extrémité (22b) et y est réfléchi pour revenir en tant qu'onde progressive liée en partant de la deuxième extrémité (22b), le long de la gaine de conducteur (16b), en direction de la première extrémité (18b),
dans laquelle l'énergie arrivant à la deuxième extrémité (22b) en raison de l'introduction de signal d'émission ayant lieu à la première extrémité (18b) revient à plus de 50% en tant qu'onde progressive liée à la structure conductrice (12b) en partant de la deuxième extrémité (22b) en direction de la première extrémité (18b) et/ou l'énergie introduite à la première extrémité (18b) revient à plus de 40% en tant qu'onde progressive liée à la structure conductrice (12b) en partant de la deuxième extrémité (22b) en direction de la première extrémité (18b).

9. Utilisation selon la revendication 8, pour une communication avec des transpondeurs se trouvant dans l'environnement de l'antenne à onde progressive (10b) et/ou pour une communication avec des composants d'un réseau d'ordinateurs se trouvant dans l'environnement de l'antenne à onde progressive.
